# EUROPEAN PATENT SPECIFICATION

(11) **EP 1 532 783 B1**
(45) Date of publication and mention of the grant of the patent: **09.05.2007**
(21) Application number: 03784931.2
(22) Date of filing: 06.08.2003
(51) Int. Cl.: H04L 12/58, G06F 21/00, H04L 9/08, G06Q 10/00

(54) **System for secure document delivery**
System zur sicheren Dokumentlieferung
Système pour la distribution de documents sécurisée

(30) Priority: 07.08.2002 US 401945 P; 20.03.2003 US 394446
(43) Date of publication of application: 25.05.2005
(73) Proprietor: Kryptiq Corporation, Hillsboro, OR 97124 (US)
(72) Inventor: KARAMCHEDU, Murali, M., Beaverton, OR 97006 (US); SPONAUGLE, Jeffrey, B., Tigard, Oregon 97223 (US)
(74) Representative: Dendorfer, Claus
(86) International application number: PCT/US2003/024540
(87) International publication number: WO 2004/015943

(56) References cited:
- WO-A-01/52485
- WO-A-98/58332
- US-A- 5 588 059
- US-A- 5 903 723

## Description

### BACKGROUND OF THE INVENTION

### 1. Field of the Invention

The present invention relates generally to the field of data processing. More specifically, the present invention relates to a system and method for secure data storage through opaque message archives.

### 2. Background Information

With advances in integrated circuit, microprocessor, networking and communication technologies, an increasing number of devices, in particular, digital computing devices, are being interconnected. This increased interconnectivity of computing devices has laid the groundwork for a communication infrastructure particularly well suited for electronic communications between such computing devices. More specifically, the increased interconnectivity of computing devices has led to the near ubiquitous adoption of electronic mail (email) as a standard mode of communication.

In the past, electronic mail communications were limited to the exchange of text-based messages between a relatively small populous. Over time, however, email applications and associated communications protocols have become increasingly sophisticated enabling more complex messages to be exchanged between larger numbers of individuals. For example, in addition to enabling the exchange of simple text-messages, many modern day email clients allow users to exchange complex, multipart MIME (Multipurpose Internet Mail Extensions) encoded files as well as a wide variety of binary attachments. Furthermore, with the introduction of web-based email clients that utilize World Wide Web protocols, such as the hypertext transmission protocol (HTTP) for the exchange of messages, access to email has become even more prolific.

Unfortunately, however, with increased email accessibility has come the need for improved security with respect to transmission and storage of messages and data. For example, although many existing email servers attempt to store email messages in a secure manner through techniques such as encryption, the access information needed to decrypt encrypted messages is typically co-located on the same server as the stored messages. Accordingly, anyone who is able to gain access to the storage server, whether it may be a system administrator or an unscrupulous hacker, will have access to the encrypted messages as well as access to the information needed to decrypt those messages. Thus, it should be readily apparent, that by storing the access information necessary to gain access to encrypted data on the same device as the encrypted data itself, the data may be susceptible to unauthorized viewing by anyone who is able to gain access to the storage server, whether sanctioned or otherwise. Furthermore, although many mail servers store secure messages on behalf of senders, even a larger number of mail servers store unsecured messages (and data) on behalf of senders. Accordingly, in the event that an unauthorized access did occur on a message storage server, it may be very difficult for the server operator to prove that a particular message or file was not accessed without authorization.

One prior art system for storing encrypted email at a storage server is known from US-A-5 903 723.

The invention relates to a system according to claim 1. Preferred embodiments are set forth in the dependent claims.

### BRIEF DESCRIPTION OF DRAWINGS

The present invention will be described by way of exemplary embodiments, but not limitations, illustrated in the accompanying drawings in which like references denote similar elements, and in which:
Figure 1 illustrates an overview of a secure messaging system, including various logical device interactions in accordance with one embodiment of the invention;
Figure 2 is a flow diagram illustrating an operational flow for secure message storage and server-based notification generation, in accordance with one embodiment of the invention;
Figure 3 is a flow diagram illustrating an operational flow for secure message storage and sender-based notification generation, in accordance with one embodiment of the invention;
Figure 4 illustrates a graphical representation of one embodiment of a secure message delivery dialog through which a sender may initiate delivery of a secure message to one or more recipients;
Figure 5a illustrates a graphical representation of an example message notification designed for delivery to a recipient of a secure message, in accordance with one embodiment of the invention;
Figure 5b illustrates example hypertext markup language code corresponding to message notification 550 of Figure 5a;
Figure 6a illustrates a graphical representation of a secure message delivery dialog in which a sender can identify a predefined form to be delivered as a secure message to one or more recipients, in accordance with one embodiment of the invention;
Figure 6b illustrates a graphical representation of an example "Pre-Visit Questionnaire" form as described above with respect to Figure 6a;
Figure 6c illustrates a graphical representation of one embodiment of a secure message delivery dialog through which a sender may define a form or notification for post-delivery solicitation of data from one or more recipients;
Figure 7a illustrates an example message notification incorporating secure pre-delivery email solicitations in accordance with one embodiment of the present invention;
Figure 7b illustrates example HTML code that might be used to implement the message notification of Figure 7a in accordance with one embodiment;
Figure 7c is a flow diagram illustrating an operational flow for pre-delivery solicitation in accordance with one embodiment of the present invention;
Figure 8 is a flow diagram illustrating an operational flow for split encryption key storage in accordance with one embodiment of the invention;
Figure 9 is a flow diagram illustrating an operational flow for split encryption key storage in accordance with an alternative embodiment of the invention;
Figure 10 illustrates an example computer system suitable for use as a sending client or storage server for practicing the present invention;
Figure 11 illustrates an enterprise based secure messaging system including various logical device interactions, in accordance with one embodiment of the invention; and
Figure 12 illustrates domain relationships between a storage server and multiple message routing servers within a secure messaging system in accordance with one embodiment of the invention.

### DETAILED DESCRIPTION OF EMBODIMENTS OF THE INVENTION

In the description to follow, various aspects of the present invention will be described, and specific configurations will be set forth. However, the present invention may be practiced with only some or all aspects, and/or without some of these specific details. In other instances, well-known features are omitted or simplified in order not to obscure the present invention.

The description will be presented in terms of operations performed by a processor based device, using terms such as receiving, determining, rendering, displaying and the like, consistent with the manner commonly employed by those skilled in the art to convey the substance of their work to others skilled in the art. As is well understood by those skilled in the art, the quantities take the form of electrical, magnetic, or optical signals capable of being stored, transferred, combined, and otherwise manipulated through mechanical, electrical and/or optical components of the processor based device.

Various operations will be described as multiple discrete steps in turn, in a manner that is most helpful in understanding the present invention, however, the order of description should not be construed as to imply that these operations are necessarily order dependent. In particular, these operations need not be performed in the order of presentation.

The description repeatedly uses the phrase "in one embodiment", which ordinarily does not refer to the same embodiment, although it may. Furthermore, the terms "comprising", "including", "having", and the like, as used in the present application, are synonymous.

### Overview

In one embodiment, a storage server incorporated with the teachings of the present invention is employed to facilitate users of client devices in sending partially or fully secure email messages to one or more recipients. Similarly, a user (i.e. "sender") of an email client (i.e. "sending client") incorporated with the teachings of the present invention is able to compose an email message to be delivered to one or more recipients in either a fully secured or partially secured manner. Furthermore, the sender may employ one or more predefined or custom generated forms as a basis for the email message and/or a message delivery notification designed to alert the recipient(s) of the availability of the email message and any possible attachments. In one embodiment, a sender may require certain inputs to be entered by an intended recipient of a secure message (whether fully or partially secure), such as passwords or answers to survey questions, before the recipient may be provided with the secure email message. In one embodiment, the sender may elect to have the content of the delivered email be dependent upon the inputs provided by the recipient prior to delivery of the message. In a further embodiment, a split encryption key methodology is utilized in which secure messages or portions of messages are stored in an encrypted form on the storage server in conjunction with only a portion of the access information necessary to access a given secure message.

In the following description including the claims, unless further particularized or otherwise noted, the term "message" is intended to broadly refer to electronic mail messages, attachments and/or data files in whole or in part, whether or not they comprise a text, binary, or otherwise encoded form, and whether or not they are transmitted via the Simple Mail Transport Protocol (SMTP), HTTP, file transfer protocol (FTP), trivial file transfer protocol (TFTP), or otherwise.

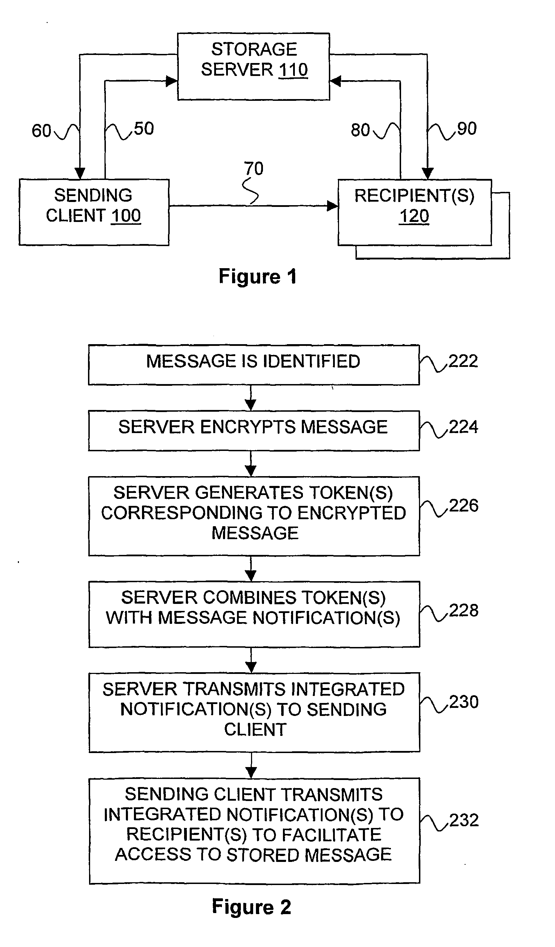

Figure 1 is a logical block diagram illustrating an overview of a secure messaging system in accordance with one embodiment of the present invention. In one embodiment, sending client 100 is equipped with a generic user agent to facilitate the composition and transmission of messages and/or data to one or more recipients 120. In one embodiment, the user agent represents an electronic mail (email) client, such as "Outlook" from Microsoft Corporation or "Notes" from IBM Corporation, equipped to send and receive data and messages via SMTP and/or HTTP. In one embodiment, sending client 100 is further equipped with secure messaging services including message notification and form generation logic to facilitate the exchange of secure messages between sending client 100, storage server 110, and one or more recipients 120, for example. The secure messaging services may be implemented as a plug-in, an application programming interface (API), or executable instructions integrated with or otherwise adjunct to the user agent.

Storage server 110 represents a computing device equipped to receive communication requests from a sending client, and securely store one or more messages and/or data received from or identified by the sending client. In one embodiment, storage server 110 includes secure messaging services to encrypt messages/data on behalf of sending client 110, and to generate one or more encryption keys to facilitate recipient access to the encrypted messages/data. In one embodiment, storage server includes message notification and form generation logic to generate message notifications designed to notify recipients of a message as to the existence of the message on storage server 110.

Recipients 120 represent one or more computing devices equipped with a generic user agent to receive and transmit network messages. In one embodiment, recipients 120 are equipped to receive SMTP based messages, and to both receive and transmit HTTP based requests.

In the illustrated embodiment, sending client 100 transmits a request to storage server 110 to store an identified message (or portion of a message) in a secure manner (50). In one embodiment, the identified message is transmitted to storage server 110 in association with the request, whereas in another embodiment, sending client 100 merely indicates a message that has been previously stored by storage server 110. In one embodiment, in response to the sending client's request (50), storage server 110 securely stores the identified message and generates access data associated with the securely stored message in the form of an access token. In one embodiment, storage server 110 securely stores the message by encrypting the message using a split encryption key having two or more key portions. In one embodiment, storage server 110 retains a first key portion and transmits a second key portion to the sending client. In other embodiments, however, storage server 110 may employ other means of securely storing the message besides encryption.

Once generated, the access token is returned to sending client 100 by storage server 110 (60). In one embodiment, storage server 110 integrates the access token with a message notification before transmitting the integrated notification to sending client 100. In another embodiment, storage server 110 transmits the access token to sending client 100 where the access token is then integrated with a message notification by sending client 100. In various embodiments, the message notification may be selected from one or more predefined notifications or it may be dynamically or manually generated by storage server 110 and/or sending client 100.

Sending client 100 then transmits the integrated notification to one or more of recipients 120 to facilitate recipient access to the message (70). In one embodiment, message notifications are delivered from sending client 100 to one or more recipients 120 in the form of electronic mail messages using an email based communications protocol such as SMTP or X.400. Once a recipient has received a message notification (in e.g. their email inbox), the recipient may open and view the message notification as they would with any other email message. In one embodiment, the recipient may utilize a user input device such as a mouse to select a hyperlink or one or more controls incorporated within the notification to initiate retrieval of one or more corresponding secure messages stored by storage server 110. In one embodiment, the access token is submitted to storage server 110 by one or more of recipients 120 in response to recipient input (80).

In response to receiving the access token from the one or more recipient(s) 120, storage server 110 transmits the corresponding secure message (or a portion thereof) to recipient(s) 120 (90). In one embodiment, communications between sending client 100 and storage server 110, as well as communications between recipients 120 and storage server 110, occur in accordance with a first communication protocol such as HTTP, whereas communications between sending client 100 and recipients 120 occur in accordance with a second communication protocol such as SMTP.

### Message and Notification Generation

Figure 2 is a flow diagram illustrating an operational flow for secure message storage and server-based notification generation, in accordance with one embodiment. In the illustrated embodiment, a message that is to be securely stored.and delivered to one or more recipients in accordance with the teachings of the present invention is identified (by e.g. sending client 100) to storage server 110, (block 222). In one embodiment, sending client 100 transmits the identified message to storage server 110, whereas in another embodiment, sending client 100 merely identifies the message from amongst one or more messages previously stored by storage server 110. Once the message has been identified to storage server 110, storage server 110 encrypts the message (block 224) and generates one or more access tokens corresponding to the encrypted message (block 226). In one embodiment, each access token includes at least a portion of the access data needed for the one or more indicated recipients to access the message. In one embodiment, a single access token is generated for all recipients, whereas in an alternative embodiment, a recipient individualized access token is generated for each recipient. Storage server 110 then combines the access token(s) with one or more message notifications (block 228). In one embodiment, a single message notification is generated for all recipients, whereas in another embodiment, recipient individualized message notifications are utilized. In one embodiment, storage server 110 combines the access token with an existing message notification, whereas in another embodiment server 110 generates a new message notification with which the token is then combined. Storage server 110 then transmits the token-enhanced (i.e. token integrated) notification to sending client 110 (block 230), where it is further transmitted by sending client 110 to one or more of recipients 120 to facilitate access to the stored secure message by recipient(s) 120 (block 232).

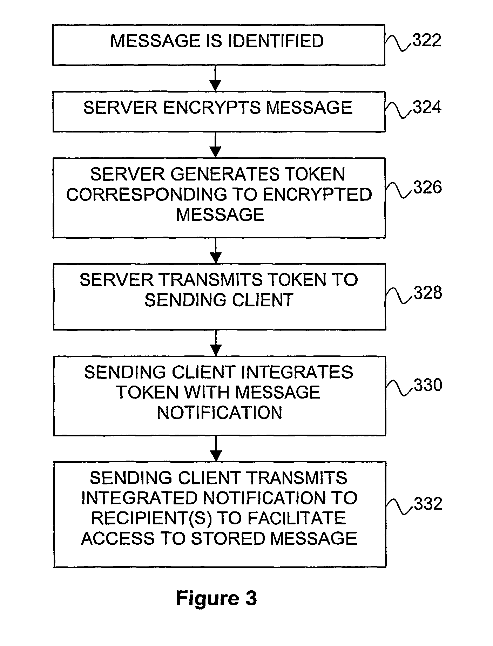

In the process described in Figure 2, the message notification was described as being generated and integrated with the access token by the server. In an alternative embodiment, the sending client integrates the server-generated access token with a message notification (whether it be pre-existing or dynamically generated). Figure 3 is a flow diagram illustrating an operational flow for secure message storage and sender-based notification generation, in accordance with one embodiment of the invention. In the illustrated embodiment, a message that is to be securely stored and delivered in accordance with the teachings of the present invention is first identified to storage server 110 (block 322). In one embodiment, sending client 100 transmits the identified message to storage server 110, whereas in another embodiment, sending client 100 identifies the message from amongst one or more messages previously stored by storage server 110. Once the message has been identified by storage server 110, storage server 110 encrypts the message (block 324) and generates one or more access tokens corresponding to the encrypted message (block 326). In one embodiment, the one or more access tokens include at least a portion of the access data needed to access the message. Once an access token is generated, storage server 110 transmits the token back to sending client 100 (block 328) where the token is integrated with a message notification by sending client 100 (block 330). Thereafter, sending client 100 transmits the integrated message notification to one or more designated recipients (block 332).

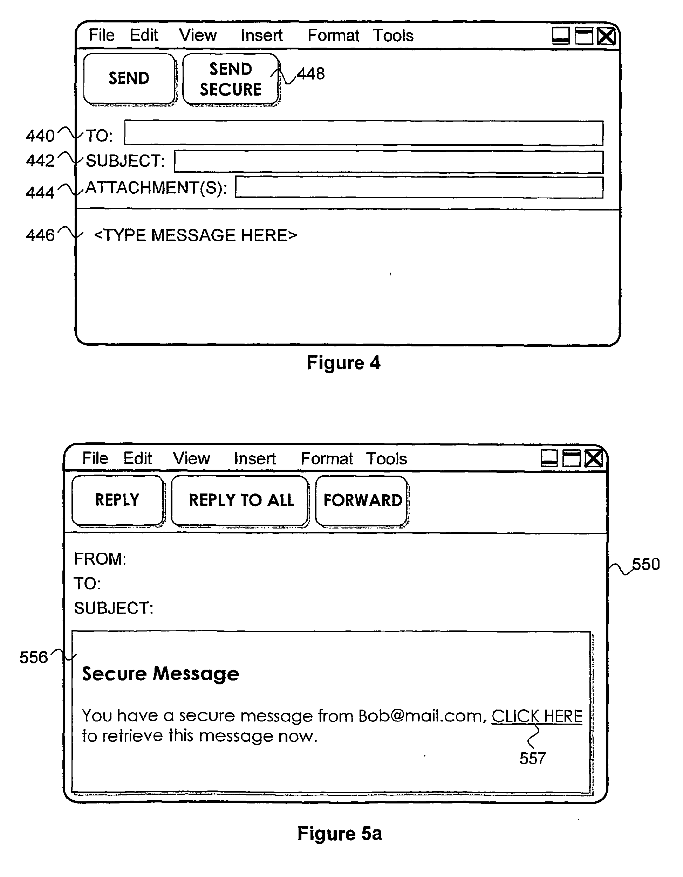

Figure 4 illustrates a graphical representation of one embodiment of a secure message delivery dialog through which a sender may initiate delivery of a secure message to one or more recipients. The sender may manifest their intent to have a particular message or attachment delivered in a secure manner through one or more graphical icons or controls such as "Send Secure" button 448 as shown in Figure 4. In the illustrated embodiment, the sender may provide one or more addresses corresponding to one or more of message recipients 120 in the "To" data entry field 440, as well as the subject matter of the message in the "Subject" data entry field 442. In one embodiment, the sender may enter free-form text in message window 446 that may be stored by storage server 110 as part of a secure message, or that may be incorporated as part of a message notification. Additionally, the sender may identify one or more attachments, e.g. via attachment field 444, that are to be securely stored and delivered by storage server 110 in association with the secure message.

In one embodiment, as a result of the sender opting to deliver a message in a secure manner, sending client 100 transmits an HTTP based request to storage server 110 that includes the body of the message and optionally, any attachments that might accompany the message. The request may be characterized by a single exchange between sending client 100 where the message is transmitted to storage server 110 along with the request, or by a series of exchanges between sending client 100 and storage server 110 where the message is transmitted by sending client 100 at some point after an initial connection is established with storage server 110.

In one embodiment of the invention, storage server 110 generates message notifications to notify indicated recipients as to the presence of a secure message awaiting delivery to the recipients. Figure 5a illustrates a graphical representation of an example message notification designed for delivery to a recipient of a secure message, in accordance with one embodiment of the invention. As shown, message notification 550 includes notification window 556 having a text-based notification displayed therein. In the illustrated embodiment, the text based notification includes hyperlink 557, which when selected by a recipient, causes an access token associated with the corresponding secure message to be transmitted to storage server 110.

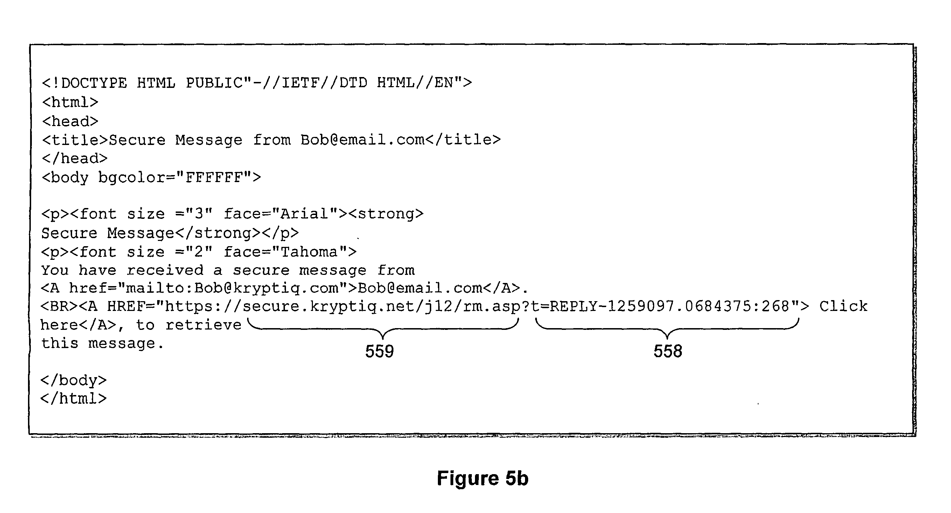

Figure 5b illustrates example hypertext markup language code corresponding to message notification 550 of Figure 5a. In the illustrated example, upon a recipient selecting hyperlink 557 of Figure 5a, token 558 is submitted to storage server 110 (as identified by URL 559) via the secure hypertext transmission protocol (HTTPS).

In accordance with one embodiment of the invention, secure message notifications may be selected by e.g. a sender from a group of predefined message notifications or dynamically generated based upon one or more properties or characteristics associated with the corresponding secure message, or based upon metadata that may accompany the message. In one embodiment, a message notification may be based on characteristics such as the identity of the sender or recipients, network domains associated with the sender or recipients, the message subject, the time that the message was sent, length of the message, and so forth. For example, storage server 110 might generate a message notification containing a particular branded logo for each secure message that is transmitted by an employee of a corresponding company/subsidiary. Similarly, storage server 110 might generate a message notification conveying a patriotic "look and feel" that is to be used in conjunction with secure messages transmitted e.g. on July fourth.

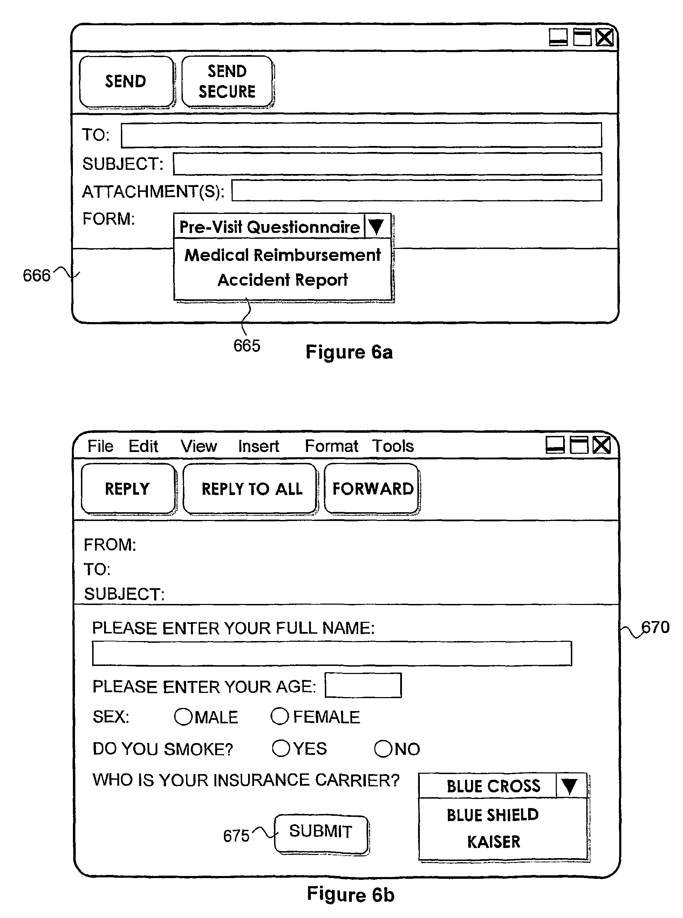

In one embodiment of the invention, storage server 110 contains predefined forms that may be identified for secure delivery to one or more recipients. Figure 6a illustrates a graphical representation of a secure message delivery dialog in which a sender can identify a predefined form to be delivered as a secure message to one or more recipients, in accordance with one embodiment of the invention. The secure message delivery dialog illustrated in Figure 6a is similar to the secure message delivery dialog depicted in Figure 4, except the secure message delivery dialog of Figure 6a includes form identification facilities, such as pull-down control 665, that includes the names of available forms stored on storage server 110. In one embodiment, the sender may select a predefined form and optionally provide supplemental information (such as text or graphics via e.g. message window 666) to be associated with the form. In one embodiment, storage server 110 may intersperse the supplemental information with the selected form to create a combined secure message to be stored by storage server 110. In another embodiment of the invention, storage server 110 may utilize the supplemental information to generate all or a portion of the message notification associated with the secure message.

Figure 6b illustrates a graphical representation of an example "Pre-Visit Questionnaire" form as described above with respect to Figure 6a. As shown, form 670 includes a number of data entry facilities for soliciting post-delivery data from a recipient (i.e. data that is solicited from a recipient after delivery of an associated message). In the illustrated embodiment, form 670 includes a number of graphical controls through which a patient/recipient, for example, can provide information to a doctor/sender regarding an upcoming office visit by the patient to the doctor. In the illustrated embodiment, the patient can provide the requested data and submit the data to storage server 110 by e.g. selecting submit button 675. In one embodiment of the invention, a hidden control is additionally utilized to facilitate submission of recipient individualized information in the form of an access token to the storage server in association with a corresponding form.

In addition to predefined forms, a sender can cause a custom form (or notification) to be generated, whether by the storage server or by the sending client, in order to facilitate post-delivery solicitation of data from one or more message recipients. In one embodiment, a sending client submits metadata to the storage server to facilitate generation of the form by the server.

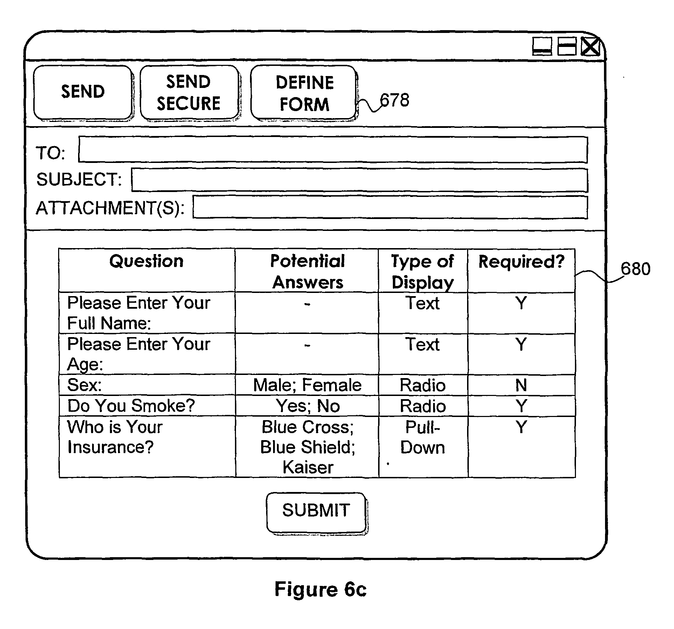

Figure 6c illustrates a graphical representation of one embodiment of a secure message delivery dialog through which a sender may define a form or message notification for post-delivery solicitation of data from one or more recipients. In the illustrated embodiment, a sender can initiate the custom form generation process by e.g. selecting a graphical control such as "define form" button 678. In one embodiment, in response to a sender's input, form definition table 680 may be displayed to facilitate entry of definitional metadata by a sender, however other automatic and manual metadata and/or form definition techniques such as hand-coding of HTML may be used.

In one embodiment, form data provided by the sender, such as that provided via table 680, is transmitted to storage server 110, which in turn utilizes the data to generate a corresponding form. In one embodiment, storage server 110 may update or supplement the generated form or form data based upon one or more rules, dependencies or heuristics, for example. After the form has been generated, storage server 110 stores the form in a secure manner and returns at least a portion of the access data corresponding to the form to sending client 100, as described above. Sending client 100 then delivers the access data to one or more recipients 120 in association with a message notification generated by the sending client or the server. The recipient(s) may then retrieve the form using the access data, and provide the solicited information accordingly. In one embodiment, upon provision by the recipients of the solicited for data, the form data is submitted to the server for processing.

In an alternative embodiment, the sending client rather than server 110 uses the form data provided by the sender, such as via table 680, to generate the custom form. The sending client then returns all or a portion of the form to the server for secure storage, and the server returns access information associated with the stored form to the sending client. In one embodiment, the sending client then packages the remaining (i.e. non-secure) portion of the form along with the non-secure information, and delivers the package to the recipients. In one embodiment, portions of a message or document that are going to be encrypted or otherwise stored in a secure manner are stored on the server, whereas messages or portions of a message or document that are to remain non-secure are retained on the sending client.

### Pre-Delivery Solicitation

In one embodiment of the invention, a sender may solicit pre-delivery information (i.e. data that is solicited from a recipient before delivery of an associated message) from one or more recipients. In one embodiment, a sender may require that certain inputs, such as passwords or answers to survey questions, be entered by an intended recipient of a secure message before the recipient may be provided with the secure email message. Moreover, in one embodiment, the sender may elect to have the content of the delivered email be dependent upon the inputs provided by the recipient prior to delivery of the message. In one embodiment, the storage server utilizes one or more scripting technologies, such as active server pages (ASP) or common gateway interface (CGI) scripting, to dynamically determine a message or portion of a message to be delivered to one or more identified recipients based upon the inputs provided.

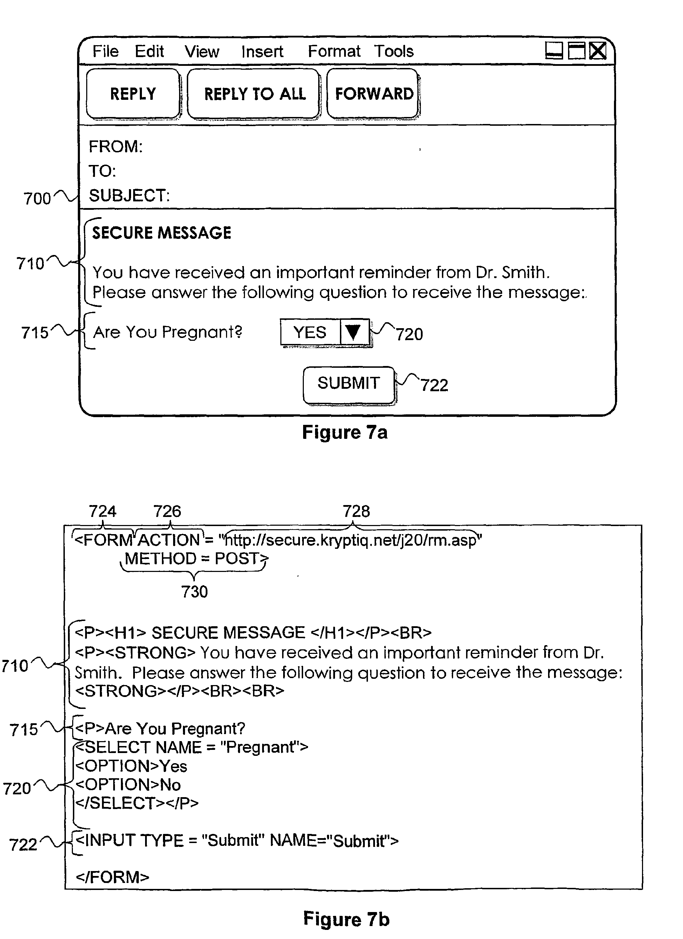

Figure 7a illustrates an example message notification incorporating secure pre-delivery email solicitations in accordance with one embodiment of the present invention. As shown, message notification 700 includes notification text 710, pre-delivery solicitation 715, and data input controls 720 and 722. Notification text 710 is designed to notify one or more recipients as to the presence of a secure message available for retrieval by the recipient(s), while pre-delivery solicitation 715 is designed to solicit information from the recipient prior to delivery of the secure message, and data input controls 720 and 722 are designed to facilitate data entry and submission by the recipient(s). In one embodiment, the storage server is equipped to receive the data submission, determine an appropriate message based upon the submission, and deliver the determined message to the recipients accordingly. For example, if a recipient were to indicate through e.g. data input control 720 that they were not pregnant, the server might return a message that reads: "OUR RECORDS INDICATE THAT YOU ARE DUE FOR A VACCINATION BOOSTER SHOT. PLEASE MAKE AN APPOINTMENT WITH OUR OFFICE IMMEDIATELY." On the other hand, if a recipient were to indicate that they were pregnant, the server might return a message that reads: "OUR RECORDS INDICATE THAT YOU ARE DUE FOR A VACCINATION BOOSTER SHOT. HOWEVER, SINCE YOU ARE PREGNANT, YOU MAY WISH TO DELAY THE VACCINATION UNTIL 3 MONTHS AFTER YOUR DELIVERY DATE." Thus, the content of the delivered email can be dependent upon the input provided by the recipient prior to delivery of the stored message.

Figure 7b illustrates example HTML code that could be used to implement the message notification of Figure 7a in accordance with one embodiment. As shown in the illustrated embodiment, a FORM element (724) is utilized to gather recipient input data that is then submitted via a POST method (730) to a storage server corresponding to the address (728) associated with the ACTION attribute (726). In the illustrated embodiment, a simple drop-down menu selection is utilized to receive recipient input and return the input to the storage server. In one embodiment, a hidden field may be used to transmit an access token, such as a recipient individualized token or encryption key to the storage server as follows: <INPUT TYPE="hidden" NAME="Token" VALUE="{access token}">. In other embodiments, a wide variety of data input controls and interfaces might be utilized. For example, a sender may require recipients to be authenticated via a password before the recipients are able to retrieve the message.

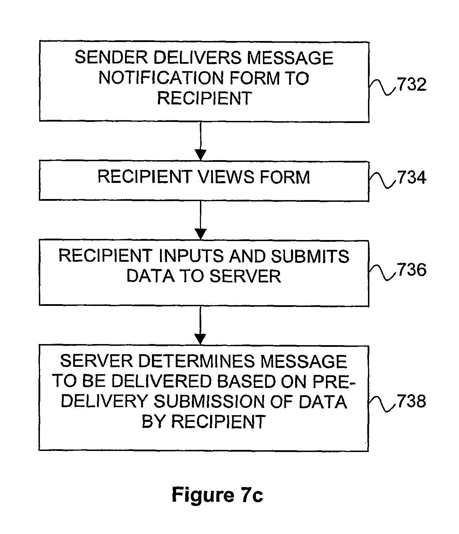

Figure 7c is a flow diagram illustrating an operational flow for pre-delivery solicitation in accordance with one embodiment of the present invention. In the illustrated embodiment, the process begins with the sender delivering a message notification form including data solicitation facilities to one or more recipients (block 732). In one embodiment, the sending client generates the message notification form, whereas in an alternative embodiment, the storage server generates the message notification. Once the notification is received, the recipient views the form on e.g. a display device (block 734), provides input data in response to the solicitation, and submits the form to the storage server (block 736). In response, the storage server then determines the message to be delivered based on the pre-delivery submission of data by recipient (block 738).

### Opaque Archives

As was previously mentioned above with respect to various embodiments of the invention, the storage server of the present invention stores messages and data in a secure manner on behalf of a sender for delivery to one or more recipients. In prior message storage arrangements, where encryption techniques are used to store data on a central server, it was often the case that the access information (such as an encryption key) necessary to access the stored data was stored on the same server as the data. These 'secure storage' schemes are premised on the idea that the storage server itself is secure notwithstanding the fact that server administrators are typically granted full access to the data stored on a managed server, and the fact that server is always susceptible to an attack by a hacker. Because the encrypted files and the access information (such as the encryption keys) necessary to access the files have historically been stored together on the same server, the files stored on such a server are inherently at risk to unauthorized access.

In another aspect of the present invention, a split or partial encryption key methodology is utilized in which a first encryption key portion is retained by the server and a second encryption key portion is delivered to a recipient to facilitate access by the recipient to a corresponding message or other electronic document. In one embodiment of the invention, the server transmits the second encryption key portion to the sending client of the message, which in turn, delivers the second encryption key portion to a recipient in association with a message notification. Although for the purpose of clarity, the following description focuses primarily on an embodiment of the present invention in which two encryption key portions are utilized, the teachings herein may be extended to the use of multiple (i.e. more than two) key portions without departing from the intended spirit and scope of the invention.

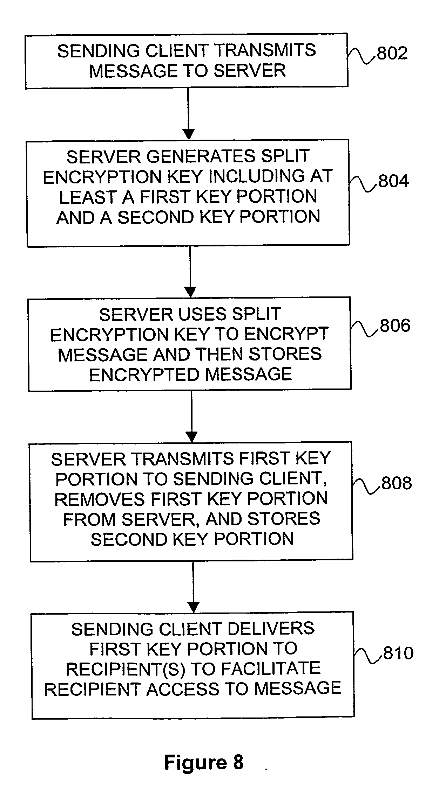

Figure 8 is a flow diagram illustrating an operational flow for split encryption key storage in accordance with one embodiment of the invention. In the illustrated embodiment, the process begins with a sending client transmitting a message (or portion of a message) that is to be stored in a secure manner to a storage server (block 802). In one embodiment, the sending client additionally generates a randomized seed value, such as a globally unique identifier (GUID), and transmits the seed value to the storage server in association with the message. However, in other embodiments, the storage server may itself generate the randomized seed value or alternatively, no seed value need be used. Once the message has been received, the storage server then generates a split encryption key including at least a first encryption key portion and a second encryption key portion (block 804). In one embodiment, one or more hash functions are applied to the randomized seed value to generate the first and second encryption key portions, which when combined, form the split encryption key. In an alternative embodiment, a first hash function is used to generate a single encryption key that is then bifurcated into the first encryption key portion and the second encryption key portion. Next, the storage server uses the split encryption key to encrypt and store the message (block 806). Once the message has been encrypted, the storage server transmits the first key portion to the sending client, removes the first key portion from the server, and stores the second key portion (block 808). In turn, the sending client transmits the first key portion to one or more designated recipients to facilitate recipient access to and decryption of the stored and encrypted message (or portion of message) (block 810).

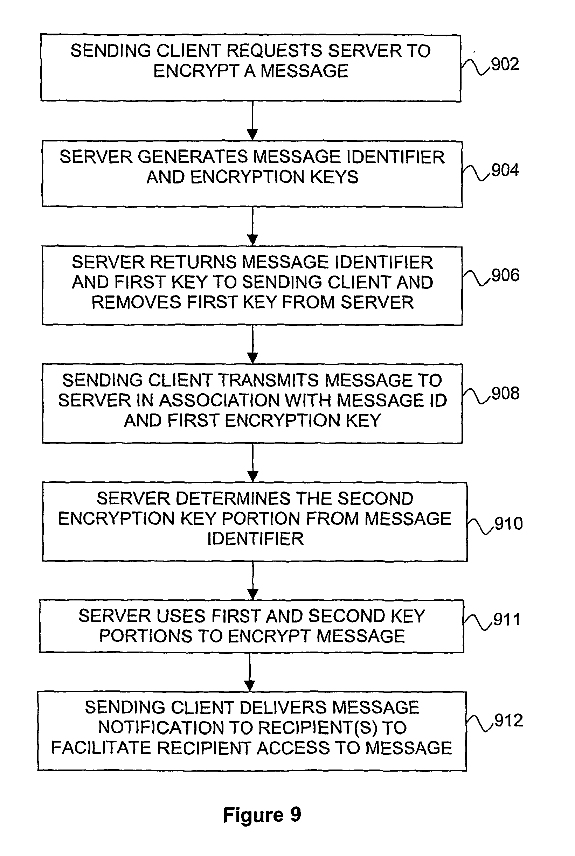

Figure 9 is a flow diagram illustrating an operational flow for split encryption key storage in accordance with an alternative embodiment of the invention. In the illustrated embodiment, the process begins with the sending client requesting the storage server to encrypt a message or a portion of a message. In one embodiment, the request may be accompanied by a variety of metadata to be used by the storage server in conjunction with the message encryption process. For example, the metadata may be used by the storage server to facilitate message notification generation and/or form generation, rule definitions, data dependencies and/or heuristic definitions, and so forth. In one embodiment, the request may further include a randomized seed value such as a GUID.

After receiving the request, the server generates a message identifier to be associated with and to uniquely identify the message. Additionally, the server generates a split encryption key including at least a first key portion and a second key portion to be used to encrypt the message (block 904). In one embodiment, the message identifier represents a randomized seed value received in association with the sending client's request. In one embodiment, the storage server generates one recipient-individualized token for each recipient identified or enumerated to the storage server by the sending client. In one embodiment, each individualized token is associated with the message identifier and includes an obfuscated combination of the first encryption key portion and a recipient individualized identifier, in which the recipient individualized identifier may e.g. represent an email address or other means of differentiating one recipient from another.

The storage server then returns the message identifier and the first encryption key portion to the sending client, and removes the first encryption key portion from the storage server (block 906). In one embodiment, the storage server also returns the one or more recipient individualized tokens to the sending client. In response, the sending client transmits the message to the storage server in association with the message identifier and the first encryption key portion (block 908). The storage server then compares the message identifier received from the sending client with one or more message identifiers known to the storage server in order to identify/determine the second encryption key portion associated with the message identifier(s) and, in turn, the message (block 910). The storage server then uses the first and second encryption key portions to encrypt and store the message (block 911). Additionally, the sending client delivers a message notification, including at least the first encryption key portion, to one or more intended recipients to facilitate recipient access to the stored message (block 912). In one embodiment, the message notification (whether generated in whole or in part by the sending client or the storage server) includes a recipient individualized token.

In one embodiment, each recipient access is logged by the storage server and associated with the message identifier. In one embodiment, the sending client deposits the message identifier and the first encryption key portion into one or more of the sending client's mail folders, such as a sent mail folder, for use e.g. in obtaining log information about the associated message such as whether a recipient has read the message or forwarded to message to another recipient.

### Example Client System

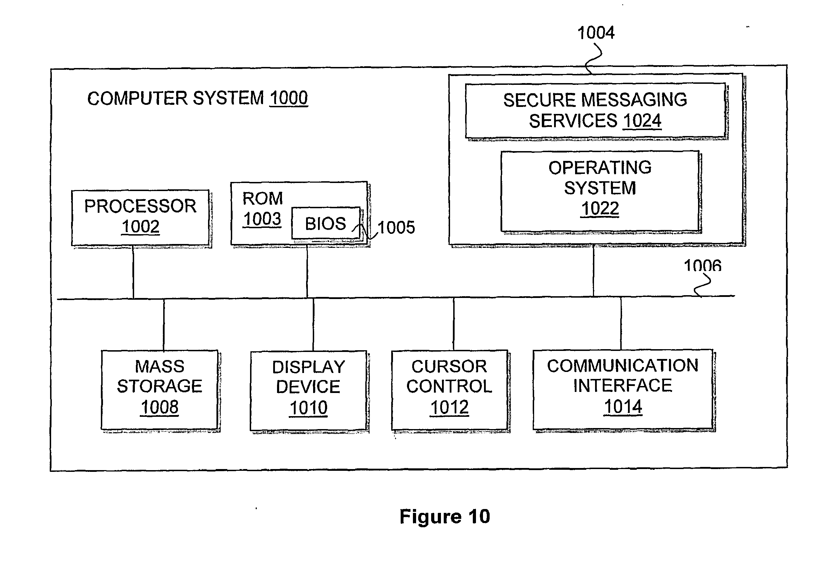

Figure 10 illustrates an example computer system suitable for use as a sending client or storage server in accordance with the teachings of the present invention. As shown, example computer system 1000 includes processor 1002, ROM 1003 including basic input/output system (BIOS) 1005, and system memory 1004 coupled to each other via "bus" 1006. Also coupled to "bus" 1006 are nonvolatile mass storage 1008, display device 1010, cursor control device 1012 and communication interface 1014. During operation, memory 1004 may include working copies of operating system 11022, and secure messaging services 11024. In the case of the sending client, secure messaging services 11024 include message notification and form generation logic of the present invention to facilitate the exchange of secure messages between a sending client, storage server, and one or more recipients. In the case of a storage server, messaging services 11024 facilitate storage and encryption of messages/data on behalf of sending client, and the generation of one or more encryption keys to facilitate recipient access to the encrypted messages/data.

Except for the teachings of the present invention as incorporated herein, each of these elements may represent a wide range of these devices known in the art, and otherwise performs its conventional functions. For example, processor 1002 may be a processor of the Pentium® family available from Intel Corporation of Santa Clara, CA, which performs its conventional function of executing programming instructions of operating system 11022 and secure messaging services 11024, including those implementing the teachings of the present invention. ROM 1003 may be EEPROM, Flash and the like, and memory 1004 may be SDRAM, DRAM and the like, from semiconductor manufacturers such as Micron Technology of Boise, Idaho. Bus 1006 may be a single bus or a multiple bus implementation. In other words, bus 1006 may include multiple properly bridged buses of identical or different kinds, such as Local Bus, VESA, ISA, EISA, PCI and the like.

Mass storage 1008 may represent disk drives, CDROMs, DVD-ROMs, DVD-RAMs and the like. Typically, mass storage 1008 includes the permanent copy of operating system 11022 and secure messaging services 11024. The permanent copy may be downloaded from a distribution server through a data network (such as the Internet), or installed in the factory, or in the field. For field installation, the permanent copy may be distributed using one or more articles of manufacture such as diskettes, CDROM, DVD and the like, having a recordable medium including but not limited to magnetic, optical, and other mediums of the like.

Display device 1010 may represent any of a variety of display types including but not limited to a CRT and active/passive matrix LCD display, while cursor control 1012 may represent a mouse, a touch pad, a track ball, a keyboard, and the like to facilitate user input. Communication interface 1014 may represent a modem interface, an ISDN adapter, a DSL interface, an Ethernet or Token ring network interface and the like.

### Enterprise-Based Opaque Archives

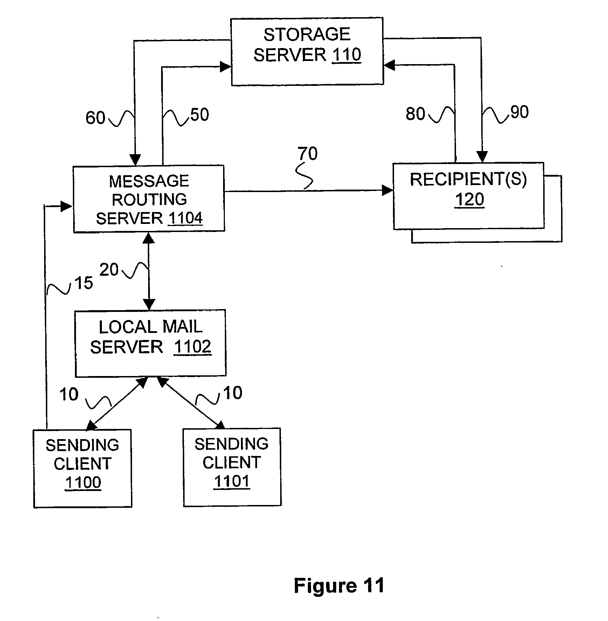

In accordance with a further aspect of the invention, an enterprise based secure messaging system will now be described. Figure 11 illustrates an enterprise based secure messaging system including various logical device interactions, in accordance with one embodiment of the invention. The enterprise based messaging system of Figure 11 is similar in form to the messaging system of Figure 1, except that message routing server 1104 and local mail server 1102 have been inserted between sending client 1100 and 1101 and storage server 110. In accordance with one embodiment of the invention, local mail server 1102 represents a server equipped with electronic mail services, such as those provided by Exchange from Microsoft Corporation or Domino from IBM Corporation, to receive outgoing message transmission requests from clients 1100 and 1101, to receive incoming messages to be delivered to clients 1100 and 1101, and to temporarily store or queue both the outgoing and incoming messages until such time that the message destination domains/devices can be determined and contacted.

Message routing server 1104 represents a server that routes mail traffic from local mail server 1102 (and sending clients 1100 and 1101) to storage server 110 and recipients 120, much like a mail gateway. In one embodiment, outgoing messages from local mail server 1102 are first directed to message routing server 1104 before they are delivered to storage server 110 or recipients 120. In one embodiment, message routing server 1104 proxies the functionality of sending client 100 of Figure 1.

In one embodiment of the invention, a sender corresponding to either sending client 1100 or 1101 composes an SMTP-based electronic mail message addressed to one or more recipients 120, that is first delivered to local mail server 1102 (10). In one embodiment, local mail server 1102 unconditionally transmits (e.g. via redirection or forwarding) messages it receives to message routing server 1104, whereas in another embodiment, mail server 1102 may transmit messages to message routing server 1104 based upon whether or not the message is to be stored and delivered in a secure manner by storage server 110. In another embodiment of the invention, sending client 1100/1101 transmits an HTTP-based request directly (e.g. via a browser application) to message routing server 1104 identifying the message to be securely stored and delivered, , effectively bypassing local mail server 1102 (15).

In one embodiment of the invention, message routing server 1104 determines (based e.g. upon a variety of criteria such as source or destination address, content of the message, size of the message...etc.) whether a particular message is to be stored and delivered by storage server 110 in a secure manner. In one embodiment, the SMTP or HTTP-based message includes an identifier (e.g. in an associated header field) that indicates to message routing server 1104 whether the message is to be securely stored and delivered in accordance with the teachings of the present invention.

If it is determined that an identified message is to be securely stored and delivered, message routing server 1104 transmits a request to storage server 110 to store the identified message (or portion of a message) securely (50). In one embodiment, in response to the request of message routing server 1104, storage server 110 securely stores the identified message and generates access data associated with the securely stored message. In one embodiment, the access data is represented by an access token that may include just the access data or supplemental information in addition to the access data. In one embodiment, storage server 110 encrypts the message using a split encryption key having two or more key portions, with storage server 110 retaining a first key portion and transmitting a second key portion to the sending client. In other embodiments, however, storage server 110 may employ other means of securely storing the message besides encryption.

Once generated, the access token is returned to message routing server 1104 by storage server 110 (60). In one embodiment, storage server 110 combines/integrates the access token with a message notification and transmits the integrated message notification to message routing server 1104. In another embodiment, storage server 110 transmits the access token to message routing server 1104 where message routing server 1104 integrates the access token with a message notification. In various embodiments, the message notification may be selected from one or more predefined notifications or it may be dynamically or manually generated by storage server 110 and/or message routing server 1104. In one embodiment, where multiple such message routing servers are utilized by various subsidiaries of a parent company for example, each message routing server can be configured to generate subsidiary-specific notifications notwithstanding that the message routing servers are each associated with the same storage server.

Once the access token is returned to message routing server 1104,message routing server 1104 transmits the integrated notification to one or more of recipients 120 to facilitate recipient access to the message (70). In one embodiment, message notifications are delivered from message routing server 1104 to one or more recipients 120 in the form of an electronic mail messages using an email based communications protocol such as SMTP or X.400. Once a recipient has received a message notification in e.g. their email inbox, the recipient may open and view the message notification as they would with any other email message. In one embodiment, the recipient may utilize a user input device such as a mouse to select a hyperlink or one or more controls incorporated within the notification to initiate retrieval of one or more corresponding secure messages stored by storage server 110. In one embodiment, the token is submitted to storage server 110 by one or more of recipients 120 in response to recipient input (80).

In response to receiving the access token from the one or more recipients 120, storage server 110 then transmits the corresponding secure message (or a portion thereof) to one or more indicated recipients 120 (90). In one embodiment, communications between message routing server 1104 and storage server 110, as well as communications between recipients 120 and storage server 110, occur in accordance with a first communication protocol such as HTTP, whereas communications between message routing server 1104 and recipients 120 occur in accordance with a second communication protocol such as SMTP.

In one embodiment, in addition to storage server 110 returning the access token to message routing server 1104 (60), storage server 110 further returns one or more control parameters or instructions to message routing server 1104 to indicate whether any 'post-processing' in association with the message is to be performed. In one embodiment, storage server 110 returns one or more control parameters or instructions to message routing server 1104 to cause message routing server (e.g. via local mail server 1102 or directly) to return a message to sending client 1100/1101 that includes an access token to facilitate client 1100/1101 in accessing information as to the status of the corresponding message. In one embodiment, message routing server 1104 returns a message identifier (described above with respect to Opaque Archives) and the first encryption key portion to the sending client 1100/1101 for use e.g. by the sender in obtaining log information about the associated message such as whether a recipient has read the message or forwarded to message to another recipient.

Due to the influx of unsolicited email messages (or SPAM) that has proliferated throughout the Internet, many mail servers have been configured to perform what are referred to as reverse domain name service (or reverse DNS) lookups. Each of these lookups typically entails a mail server determining the identity of a sending client through examination of data contained within or indicated by the "to" field appearing in the message header. The mail server then compares the address or domain corresponding to the determined sending client with the network address of the device from where the message originates (e.g. as determined by the address associated with the device that opened the SMTP port connection). If the two addresses/domains differ, the receiving mail server assumes the message has been relayed without authorization, designates the message as SPAM and rejects the message accordingly.

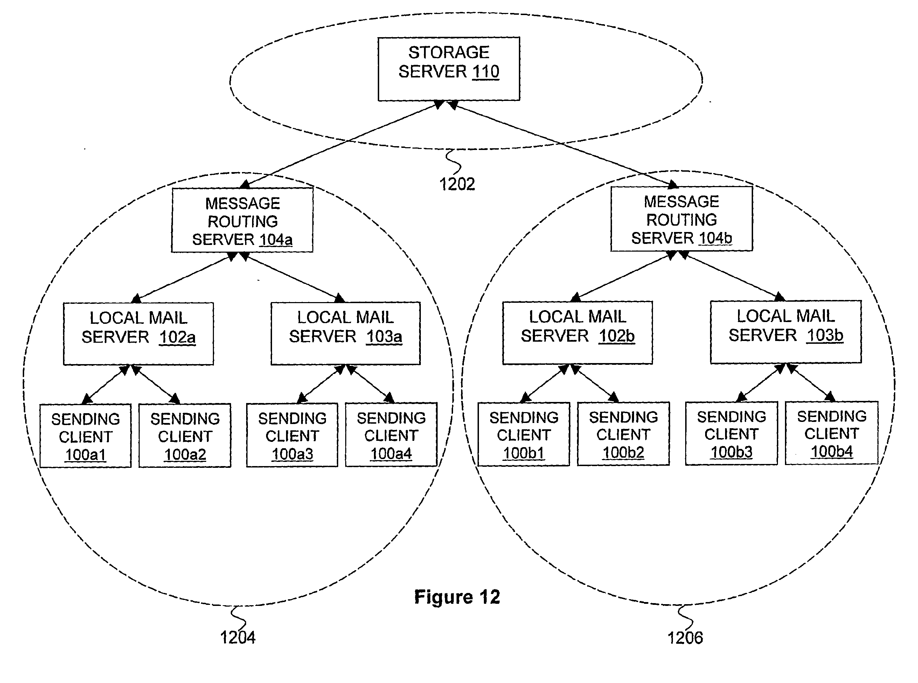

To facilitate delivery of the message delivery notifications to recipients behind certain firewalls for example, without each notification being characterized as SPAM, each message routing server 1104 is co-located within the same domain of the sending client it supports. Figure 12 illustrates domain relationships between a storage server and multiple message routing servers within a secure messaging system in accordance with one embodiment of the invention. As shown, storage server 110 located in network domain 1202 is communicatively coupled to message routing servers 1104a-b. Each of message routing servers 1104a-b is in turn communicatively coupled to local mail servers 1102a-b and 103a-b, and sending clients 100a1-a4 and 100b1-b4. Message routing server 1104a is co-located with local mail servers 1102a and 103a, and sending clients 100a1-a4, within domain 1204, and message routing server 1104b is co-located with local mail servers 1102b and 103b, and sending clients 100b1-b4 within network domain 1206. Because message notifications are transmitted (e.g. via message routing server 1104a-b) from the same domain from which they originate (e.g. via sending clients 100a1-a4 and 100b1-b4), a reverse DNS lookup performed on an associated message will not cause the message to be rejected by the receiving system.

## Claims

1. A document delivery system for delivering one or more documents between a sender and one or more recipients, said system comprising a storage server
and the system being **characterised in that** the storage server is adapted to store the one or more documents and generate a split encryption key to encrypt the one or more documents, the split encryption key having at least a first key portion that is stored on the storage server and a second key portion that is provided to a second server and discarded from the storage server;
the second server is coupled to the storage server, and adapted to provide the second key portion to the one or more recipients; and the one or more recipients are adapted to submit the second key portion to the storage server to facilitate recipient access to the one or more documents.

2. The system of claim 1, further comprising:
a local mail server adapted to forward the message from the sender to the second server.

3. The system of claim 2, further comprising:
a sending client communicatively coupled to the local mail server, and adapted to facilitate a sender in composing the message at the sending client.

4. The system of claim 1, wherein the storage server comprises:
a storage medium having stored therein programming instructions designed to enable the storage server to:
receive from the second server, a request to encrypt a message;
generate a split encryption key comprising at least a first key portion and a second key portion;
encrypt at least the first portion of the message using the split encryption key;
provide the second key portion to the second server; and
discard the second key portion from the storage server.

5. The system of claim 4, wherein the programming instructions are further designed to enable the storage server to
receive from the second server, at least a first portion of the message to be encrypted, a first message identifier uniquely identifying the message, and the first key portion;
identify the second key portion based at least in part upon the first message identifier; and
encrypt at least the first portion of the message using a combination of the first and second key portions.

6. The system of claim 4, wherein the programming instructions are further designed to enable the storage server to
generate a first identifier uniquely identifying the message;
generate one or more recipient-individualized tokens, each recipient-individualized token comprising a corresponding recipient-individualized identifier and the second key portion;
associate each of the recipient-individualized tokens with the first identifier; and
provide the one or more recipient-individualized tokens to the second server, the one or more recipient-individualized tokens to be provided by the second server to the corresponding one or more recipients to facilitate access by the one or more recipients to at least a first portion of the message.

7. The system of claim 6, wherein each of the one or more recipient-individualized tokens comprises an obfuscated combination of a corresponding recipient-individualized identifier and the second key portion.

8. The system of claim 6, wherein the programming instructions are designed to enable the storage server to generate the first identifier based at least in part upon a randomized seed value, and to discard the randomized seed value from the storage server after generation of the first and second key portions.

9. The system of claim 8, wherein the programming instructions are further designed to enable the storage server to receive the randomized seed value from the second server.

10. The system of claim 9, wherein the randomized seed value provided by the second server is a globally unique identifier, GUID.

11. The system of claim 8, wherein the programming instructions are further designed to enable the storage server to generate the randomized seed value.

12. The system of claim 8, wherein the programming instructions designed to enable the storage server to generate a split encryption key, are further designed to enable the storage server to
apply a first hash function to the randomized seed value to form the first key portion; and
apply a second hash function to the randomized seed value to form the second key portion.

13. The system of claim 8, wherein the programming instructions designed to enable the storage server to generate a split encryption key are further designed to enable the storage server to
apply a hash function to the randomized seed value to form an encryption key; and
bifurcate the encryption key to form the first key portion and the second key portion.

14. The system of claim 1, where the second server comprises:
a storage medium having stored therein programming instructions designed to enable the second server to:
transmit to the storage server, a request to encrypt at least a first part of a message,
receive from the storage server, a message identifier corresponding to the message, and the second key portion of the split encryption key to be used to encrypt the message;
transmit at least the first part of the message to the storage server in association with the message identifier; and
send the second key portion to one or more recipients to facilitate access by the one or more recipients to at least the first part of the message from the storage server.

15. The system of claim 14, wherein the programming instructions are further designed to enable the second server to
enumerate the one or more recipients to the storage server; and
receive a number of one or more recipient-individualized tokens corresponding to the one or more intended message recipients, each recipient-individualized token comprising a corresponding recipient-individualized identifier and the second key portion, wherein the recipient-individualized identifier is associated with the message identifier.

16. The system of claim 14, wherein the programming instructions are further designed to enable the second server to provide the message identifier and the second key portion to a sending client associated with the message.

17. The system of claim 14, wherein the programming instructions are further designed to enable the second server to receive the request to encrypt at least the first part of the message from a local mail server.

18. The system of claim 17, wherein the programming instructions are further designed to enable the second server to transmit the request to the storage server in the form of an SMTP based message.

19. The system of claim 14, wherein the programming instructions are further designed to enable the second server to receive the request to encrypt at least the first part of the message directly from a sending client.

20. The system of claim 19, wherein the programming instructions are further designed to enable the second server to receive the request from the sending client in the form of an HTTP based request.

## Patentansprüche

1. Dokumentzustellungssystem zum Zustellen von einem oder mehreren Dokumenten zwischen einem Absender und einem oder mehreren Empfängern, wobei das System einen Speicher-Server aufweist und das System **dadurch gekennzeichnet ist, dass**
der Speicher-Server eingerichtet ist, um das eine oder die mehreren Dokumente zu speichern und einen geteilten Verschlüsselungsschlüssel zu erzeugen, um das eine oder die mehreren Dokumente zu verschlüsseln, wobei der geteilte Verschlüsselungsschlüssel mindestens einen ersten Schlüsselabschnitt, der auf dem Speicher-Server gespeichert ist, und einen zweiten Schlüsselabschnitt aufweist, der einem zweiten Server zugeführt wird und vom Speicher-Server gelöscht wird;
wobei der zweite Server mit dem Speicher-Server verbunden ist, und eingerichtet ist, um den zweiten Schlüsselabschnitt dem einen oder den mehreren Empfängern zu liefern; und
der eine oder die mehreren Empfänger eingerichtet sind, um den zweiten Schlüsselabschnitt an den Speicher-Server zu senden, um dem Empfänger einen Zugriff auf das eine oder die mehreren Dokumente zu ermöglichen.

2. System nach Anspruch 1, weiter aufweisend:
einen lokalen Mail-Server, der eingerichtet ist, um die Nachricht vom Absender zum zweiten Server weiterzuleiten.

3. System nach Anspruch 2, weiter aufweisend:
einen Sende-Client, der mit dem lokalen Mail-Server zu kommunizieren vermag und so eingerichtet ist, dass er es einem Absender ermöglicht, die Nachricht beim Sende-Client zu verfassen.

4. System nach Anspruch 1, bei dem der Speicher-Server aufweist:
ein Speichermedium, in dem Programmanweisungen gespeichert sind, die so ausgelegt sind, dass sie den Speicher-Server befähigen, dass er:
vom zweiten Server eine Anfrage zur Verschlüsselung einer Nachricht empfängt;
einen geteilten Verschlüsselungsschlüssel erzeugt, der mindestens einen ersten Schlüsselabschnitt und einen zweiten Schlüsselabschnitt beinhaltet;
zumindest den ersten Abschnitt der Nachricht unter Verwendung des geteilten Verschlüsselungsschlüssels verschlüsselt;
den zweiten Schlüsselabschnitt dem zweiten Server zuführt; und
den zweiten Schlüsselabschnitt vom Speicher-Server löscht.

5. System nach Anspruch 4, bei dem die Programmanweisungen weiter ausgelegt sind, um den Speicher-Server zu befähigen, dass er:
vom zweiten Server zumindest einen ersten Abschnitt der zu verschlüsselnden Nachricht, eine erste Nachrichtenkennung, welche die Nachricht eindeutig identifiziert, und den ersten Schlüsselabschnitt empfängt;
den zweiten Schlüsselabschnitt zumindest teilweise basierend auf der ersten Nachrichtenkennung identifiziert; und
zumindest den ersten Abschnitt der Nachricht unter Verwendung einer Kombination des ersten und des zweiten Schlüsselabschnitts verschlüsselt.

6. System nach Anspruch 4, bei dem die Programmanweisungen weiter ausgelegt sind, um den Speicher-Server zu befähigen, dass er:
eine erste Kennung erzeugt, welche die Nachricht eindeutig identifiziert;
eine oder mehrere Empfänger-individualisierte Token (Datenmarken) erzeugt, wobei jedes Empfänger-individualisierte Token eine entsprechende Empfänger-individualisierte Kennung und den zweiten Schlüsselabschnitt beinhaltet;
eine Zuordnung jedes der Empfänger-individualisierten Token zu der ersten Kennung durchführt; und
das eine oder die mehreren Empfänger-individualisierten Token dem zweiten Server zuführt, wobei das eine oder die mehreren Empfänger-individualisierten Token durch den zweiten Server dem entsprechenden einen oder den entsprechenden mehreren Empfängern zuzuführen sind, um einen Zugriff durch den einen oder die mehreren Empfänger zumindest auf einen ersten Abschnitt der Nachricht zu ermöglichen.

7. System nach Anspruch 6, bei dem jedes von dem einen oder den mehreren Empfänger-individualisierten Token eine verschleierte Kombination aus einer entsprechenden Empfänger-individualisierten Kennung und dem zweiten Schlüsselabschnitt beinhaltet.

8. System nach Anspruch 6, bei dem die Programmanweisungen ausgelegt sind, um den Speicher-Server zu befähigen, dass er die erste Kennung zumindest teilweise basierend auf einem randomisierten Seed-Wert (Startwert) erzeugt, und den randomisierten Seed-Wert nach der Erzeugung des ersten und des zweiten Schlüsselabschnittes aus dem Speicher-Server löscht.

9. System nach Anspruch 8, bei dem die Programmanweisungen weiter ausgelegt sind, um den Speicher-Server zu befähigen, dass er den randomisierten Seed-Wert vom zweiten Server empfängt.

10. System nach Anspruch 9, bei dem der vom zweiten Server bereitgestellte randomisierte Seed-Wert eine global eindeutige Kennung, GUID, ist.

11. System nach Anspruch 8, bei dem die Programmanweisungen weiter ausgelegt sind, um den Speicher-Server zu befähigen, den randomisierten Seed-Wert zu erzeugen.

12. System nach Anspruch 8, bei dem die Programmanweisungen, die ausgelegt sind, um den Speicher-Server zu befähigen, einen geteilten Verschlüsselungsschlüssel zu erzeugen, weiter ausgelegt sind, um den Speicher-Server zu befähigen, dass er:
eine erste Hash-Funktion (Streuwertfunktion) auf den randomisierten Seed-Wert anwendet, um den ersten Schlüsselabschnitt zu erzeugen; und
eine zweite Hash-Funktion auf den randomisierten Seed-Wert anwendet, um den zweiten Schlüsselabschnitt zu erzeugen.

13. System nach Anspruch 8, bei dem die Programmanweisungen, die ausgelegt sind, um dem Speicher-Server zu befähigen, einen geteilten Verschlüsselungsschlüssel zu erzeugen, weiter ausgelegt sind, um den Speicher-Server zu befähigen, dass er:
eine Hash-Funktion auf den randomisierten Seed-Wert anwendet, um einen Verschlüsselungsschlüssel zu erzeugen; und
den Verschlüsselungsschlüssel aufteilt, um den ersten Schlüsselabschnitt und den zweiten Schlüsselabschnitt zu erzeugen.

14. System nach Anspruch 1, bei dem der zweite Server aufweist:
ein Speichermedium, in dem Programmanweisungen gespeichert sind, die ausgelegt sind, um den zweiten Server zu befähigen, dass er:
an den Speicher-Server eine Anfrage sendet, zumindest einen ersten Teil einer Nachricht zu verschlüsseln,
vom Speicher-Server eine der Nachricht zugehörige Nachrichtenkennung und den zweiten Schlüsselabschnitt des geteilten Verschlüsselungsschlüssels empfängt, der zum Verschlüsseln der Nachricht zu verwenden ist;
den zumindest ersten Teil der Nachricht an den Speicher-Server in Zuordnung zur Nachrichtenkennung sendet; und
den zweiten Schlüsselabschnitt an einen oder mehrere Empfänger sendet, um einen Zugriff durch den einen oder die mehreren Empfänger auf zumindest den ersten Teil der Nachricht vom Speicher-Server zu ermöglichen.

15. System nach Anspruch 14, bei dem die Programmanweisungen weiter ausgelegt sind, um den zweiten Server zu befähigen, dass er:
dem Speicher-Server den einen oder die mehreren Empfänger aufzählt; und
eine Anzahl von einem oder mehreren Empfänger-individualisierten Token empfängt, die dem einen oder den mehreren beabsichtigten Nachrichtenempfängern entsprechen, wobei jedes Empfänger-individualisierte Token eine entsprechende Empfänger-individualisierte Kennung und den zweiten Schlüsselabschnitt beinhaltet, wobei die Empfänger-individualisierte Kennung der Nachrichtenkennung zugeordnet ist.

16. System nach Anspruch 14, bei dem die Programmanweisungen weiter ausgelegt sind, um den zweiten Server zu befähigen, dass er die Nachrichtenkennung und den zweiten Schlüsselabschnitt einem der Nachricht zugehörigen Sende-Client zuführt.

17. System nach Anspruch 14, bei dem die Programmanweisungen weiter ausgelegt sind, um den zweiten Server zu befähigen, dass er die Anfrage zur Verschlüsselung zumindest des ersten Teils der Nachricht von einem lokalen Mail-Server empfängt.

18. System nach Anspruch 17, bei dem die Programmanweisungen weiter ausgelegt sind, um den zweiten Server zu befähigen, dass er die Anfrage an den Speicher-Server in Form einer SMTP-basierten Nachricht sendet.

19. System nach Anspruch 14, bei dem die Programmanweisungen weiter ausgelegt sind, um den zweiten Server zu befähigen, dass er die Anfrage zum Verschlüsseln zumindest des ersten Teils der Nachricht direkt von einem Sende-Client empfängt.

20. System nach Anspruch 19, bei dem die Programmanweisungen weiter ausgelegt sind, um den zweiten Server zu befähigen, dass er die Anfrage vom Sende-Client in Form einer HTTP-basierten Anfrage empfängt.

## Revendications

1. Système de distribution de documents pour délivrer un ou plusieurs documents entre un émetteur et un ou plusieurs destinataires, ledit système comprenant un serveur de stockage et ledit système étant **caractérisé en ce que**
le serveur de stockage est adapté pour stocker un ou plusieurs documents et générer une clé de chiffrage divisée pour chiffrer les un ou plusieurs documents, la clé de chiffrage divisée ayant au moins une première partie de clé qui est mémorisée sur le serveur de stockage et une deuxième partie de clé qui est fournie à un deuxième serveur et éliminée du premier serveur de stockage ;
le deuxième serveur est couplé au serveur de stockage et adapté pour fournir la deuxième partie de clé aux un ou plusieurs destinataires ; et
les un ou plusieurs destinataires sont adaptés pour soumettre la deuxième partie de clé au serveur de stockage pour faciliter l'accès aux un ou plusieurs documents.

2. Système selon la revendication 1, comprenant en outre :
un serveur de messagerie local adapté pour retransmettre le message de l'émetteur au deuxième serveur.

3. Système selon la revendication 2, comprenant en outre :
un client émetteur couplé en communication avec le serveur de messagerie local et adapté pour assister un émetteur dans la composition du message au niveau du client émetteur.

4. Système selon la revendication 1, dans lequel le serveur de stockage comprend :
un support de stockage ayant des instructions de programmation mémorisées dessus conçues pour permettre au serveur de stockage de :
recevoir à partir du deuxième serveur une requête pour déchiffrer un message ;
générer une clé de chiffrage divisée comprenant au moins une première partie de clé et une deuxième partie de clé ;
déchiffrer au moins la première partie du message en utilisant la clé de chiffrage divisée ;
fournir la deuxième partie de clé au deuxième serveur ; et
éliminer la deuxième partie de clé du serveur de stockage.

5. Système selon la revendication 4, dans lequel les instructions de programmation sont conçues en outre pour permettre au serveur de stockage de
recevoir à partir du deuxième serveur au moins une première partie du message à chiffrer, un premier identificateur de message identifiant de manière unique le message, et la première partie de clé ;
identifier la deuxième partie de clé sur la base au moins en partie du premier identificateur de message ; et
chiffrer au moins la première partie du message en utilisant une combinaison des première et deuxième parties de clé.

6. Système selon la revendication 4, dans lequel les instructions de programmation sont conçues en outre pour permettre au serveur de stockage de
générer le premier identificateur identifiant de manière unique le message ;
générer un ou plusieurs jetons individualisés de destinataire, chaque jeton individualisé de destinataire comprenant un identificateur individualisé de destinataire correspondant et la deuxième partie de clé ;
associer chacun des jetons individualisés de destinataire au premier identificateur ; et
fournir les un ou plusieurs jetons individualisés de destinataire au deuxième serveur, les un ou plusieurs jetons individualisés de destinataire étant destinés à être fournis par le deuxième serveur aux un ou plusieurs destinataires correspondant pour faciliter l'accès par les un ou plusieurs destinataires à au moins une première partie du message.

7. Système selon la revendication 6, dans lequel chacun des un ou plusieurs jetons individualisés de destinataire comprend une combinaison obscurcie d'un identificateur individualisé de destinataire correspondant et la deuxième partie de clé.

8. Système selon la revendication 6, dans lequel les instructions de programmation sont conçues en outre pour permettre au serveur de stockage de générer le premier identificateur sur la base au moins en partie d'une valeur de départ randomisée et d'éliminer la valeur de départ randomisée du serveur de stockage après génération des première et deuxième parties de clé.

9. Système selon la revendication 8, dans lequel les instructions de programmation sont conçues en outre pour permettre au serveur de stockage de recevoir la valeur de départ randomisée à partir du deuxième serveur.

10. Système selon la revendication 9, dans lequel la valeur de départ randomisée fournie par le deuxième serveur est un identificateur globalement unique GUID.

11. Système selon la revendication 8, dans lequel les instructions de programmation sont conçues en outre pour permettre au serveur de stockage de générer une valeur de départ randomisée.

12. Système selon la revendication 8, dans lequel les instructions de programmation conçues en outre pour permettre au serveur de stockage de générer une clé de chiffrage divisée sont conçues en outre pour permettre au serveur de stockage de
appliquer une première fonction hash à la valeur de départ randomisée pour former la première partie de clé ; et
appliquer une deuxième fonction hash à la valeur de départ randomisée pour former la deuxième partie de clé.

13. Système selon la revendication 8, dans lequel les instructions de programmation conçues en outre pour permettre au serveur de stockage de générer une clé de chiffrage divisée sont conçues en outre pour permettre au serveur de stockage de
appliquer une fonction hash à la valeur de départ randomisée pour former une clé de chiffrage ; et
bifurquer la clé de chiffrage pour former la première partie de clé et la deuxième partie de clé.

14. Système selon la revendication 1, dans lequel le deuxième serveur comprend :
un support de stockage ayant des instructions de programmation mémorisées dessus conçues pour permettre au deuxième serveur de :
transmettre au serveur de stockage une requête pour chiffrer au moins une première partie d'un message,
recevoir du serveur de stockage un identificateur de message correspondant au message et la deuxième partie de clé de la clé de chiffrage divisée destinée à être utilisée pour chiffrer le message ;
transmettre au moins la première partie du message au serveur de stockage en association avec l'identificateur de message ; et
envoyer la deuxième partie de clé à un ou plusieurs destinataires pour faciliter l'accès par les un ou plusieurs destinataires à au moins la première partie du message à partir du serveur de stockage.

15. Système selon la revendication 14, dans lequel les instructions de programmation sont conçues en outre pour permettre au serveur de stockage de
énumérer les un ou plusieurs destinataires au serveur de stockage ; et
recevoir un nombre d'un ou plusieurs jetons individualisés de destinataire correspondant aux un ou plusieurs destinataires de message supposés, chaque jeton individualisé de destinataire comprenant un identificateur individualisé de destinataire correspondant et la deuxième partie de clé, dans lequel l'identificateur individualisé de destinataire est associé à l'identificateur de message.

16. Système selon la revendication 14, dans lequel les instructions de programmation sont conçues en outre pour permettre au deuxième serveur de Fournir l'identificateur de message et la deuxième partie de clé à un client émetteur associé au message.

17. Système selon la revendication 14, dans lequel les instructions de programmation sont conçues en outre pour permettre au deuxième serveur de recevoir la requête pour chiffrer au moins la première partie du message à partir d'un serveur de messagerie local.

18. Système selon la revendication 17, dans lequel les instructions de programmation sont conçues en outre pour permettre au deuxième serveur de transmettre la requête au serveur de stockage sous la forme d'une requête basée sur SMTP.

19. Système selon la revendication 14, dans lequel les instructions de programmation sont conçues en outre pour permettre au deuxième serveur de recevoir la requête pour chiffrer au moins la première partie du message directement à partir d'un client émetteur.

20. Système selon la revendication 19, dans lequel les instructions de programmation sont conçues en outre pour permettre au deuxième serveur de recevoir la requête provenant du client émetteur sous la forme d'une requête basée sur HTTP.
